# EUROPEAN PATENT SPECIFICATION

(11) **EP 3 068 169 B1**
(45) Date of publication and mention of the grant of the patent: **28.10.2020**
(21) Application number: 14867384.1
(22) Date of filing: 02.12.2014
(51) Int. Cl.: H04W 36/00, H04W 36/14

(54) **METHOD AND BASE STATION FOR SWITCHING AMONG PUBLIC LAND MOBILE NETWORK IDENTIFIERS**
VERFAHREN UND BASISSTATION ZUM UMSCHALTEN ZWISCHEN IDENTIFIKATOREN EINES ÖFFENTLICHEN LANDFUNKNETZES
PROCÉDÉ ET STATION DE BASE POUR EFFECTUER UNE COMMUTATION ENTRE DES IDENTIFIANTS DE RÉSEAU MOBILE TERRESTRE PUBLIC

(30) Priority: 02.12.2013 CN 201310638282
(43) Date of publication of application: 14.09.2016
(73) Proprietor: Huawei Technologies Co., Ltd., Longgang District Shenzhen, Guangdong 518129 (CN)
(72) Inventor: HU, Chunli, Shenzhen Guangdong 518129 (CN)
(74) Representative: Goddar, Heinz J.
(86) International application number: PCT/CN2014/092782
(87) International publication number: WO 2015/081845

(56) References cited:
- EP-A1- 2 632 201
- EP-A1- 2 843 994
- WO-A1-2012/116741
- WO-A1-2013/009248
- WO-A1-2013/064419
- CN-A- 102 781 047
- CN-A- 103 037 463
- CN-A- 103 379 567
- CN-A- 103 634 857
- "3rd Generation Partnership Project; Technical Specification Group Services and System Aspects; Network Sharing; Architecture and functional description (Release 11)", 3GPP STANDARD; 3GPP TS 23.251, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.5.0, 5 March 2013 (2013-03-05), pages 1-34, XP050691814, [retrieved on 2013-03-05]

## Description

### TECHNICAL FIELD

The present invention relates to the communications field, and in particular, to a method for handover between public land mobile network identifications, a base station, and a communications network.

### BACKGROUND

In a wireless mobile network, each cell has limited coverage, and because of movement or another reason, UE (User Equipment, user equipment) usually needs to be handed over to ensure continuity of a service.

In the prior art, when an operator requires a user to be handed over in a mobile network with multiple PLMN ids (Public Land Mobile Network identification, public land mobile network identification), an MME (Mobility Management Entity, mobility management entity) in a core network sends an HRL (Handover Restriction List, handover restriction list) to a base station. The HRL includes an EPLMN (Equivalent PLMN, equivalent PLMN) list, and the EPLMN list includes PLMN identification lists of multiple mobile operators. The base station may perform handover between networks of operators according to the PLMN identification lists.

However, in the existing network, the HRL provided by the core network is an optional field and some core networks may not support the field. When the base station needs to perform handover between PLMN identifications but the core network cannot support an HRL, the base station cannot know whether handover between PLMN identifications should be performed and which PLMN identification may be used as a handover target, thereby failing to perform handover between PLMN identifications.

CN103379567A discloses a PLMN list configuring method, handover target PLMN selecting method, MME and ENB. The MME stores tracking area codes (TAC) in combination with broadcast PLMN lists and sends EPLMN lists and the TAC information to a source cell, when it is triggered by the user equipment or the source cell. A handover target is determined by performing an intersection of the PLMN list supported by adjacent cells with the EPLMN information.

EP 2632201 A1 discloses a method and device for network access, wherein a solution is proposed for providing equal opportunities of operator networks to be accessed by user equipment. To that end, a communication network identifier list is generated by a target eNodeB and broadcast in the network. In the list, the polling order of the PLMN ID is randomized or deterministically changed to improve the spread of PLMN IDs selected and accessed by the user equipment.

### SUMMARY

The present disclosure is directed to a method for handover between public land mobile network PLMN identifications according to independent claim 1, and a base station supporting different PLMNs according to claim 7. The dependent claims relate to optional embodiments. Embodiments of the present invention provide a method for handover between public land mobile network identifications, a base station, and a communications network, so that a base station can control user equipment to be handed over between PLMN identifications when a core network cannot support an HRL.

To achieve the foregoing objective, the following technical solutions are provided in the embodiments of the present invention:

According to an aspect, a method for handover between public land mobile network PLMN identifications is provided, including:
controlling, by a base station supporting different PLMNs according to a first PLMN identification list, user equipment to be handed over between PLMN identifications, where the handover between the PLMN identifications includes network handover and network redirection;
receiving, by the base station, a second PLMN identification list sent by a mobility management entity MME, where the second PLMN identification list is used for indicating a handover allowed PLMN identification corresponding to the user equipment that the base station currently serves; and
the method being characterized by further comprising:
   acquiring, by the base station, the first PLMN identification list, where the first PLMN identification list is configured by the base station and is used for indicating a handover allowed PLMN identification corresponding to each first identification currently supported by the base station, and the first identification includes one or more of a base station identification, an operator identifier, and a cell identifier.

Before the acquiring a first PLMN identification list, the method further includes:
configuring, by the base station, the first PLMN identification list.

The first PLMN identification list further includes: a reference indication identifier, used for indicating a first reference PLMN identification list according to which the base station performs handover between PLMN identifications, where the first reference PLMN identification list is the first PLMN identification list or the second PLMN identification list; and
the controlling, by the base station according to the first PLMN identification list, user equipment to be handed over between PLMN identifications includes:
acquiring, by the base station, the first reference PLMN identification list indicated by the reference indication identifier in the first PLMN identification list;
acquiring, by the base station, a handover allowed PLMN identification corresponding to each first identification currently served by the base station from the first reference PLMN identification list; and
controlling, by the base station according to the handover allowed PLMN identification, the user equipment to be handed over between PLMN identifications.

The controlling, by the base station according to the first PLMN identification list, user equipment to be handed over between PLMN identifications includes:
acquiring, by the base station, all PLMN identifications that are in the first PLMN identification list and second PLMN identification list and handover allowed PLMN identifications corresponding to the PLMN identifications as a second reference PLMN identification list;
acquiring, by the base station, a handover allowed PLMN identification corresponding to each first identification currently supported from the second reference PLMN identification list; and
controlling, by the base station according to the handover allowed PLMN identification, the user equipment to be handed over between PLMN identifications.

The controlling, by the base station according to the first PLMN identification list, user equipment to be handed over between PLMN identifications includes:
acquiring, by the base station, a same PLMN identification from the first PLMN identification list and the second PLMN identification list;
acquiring, by the base station, a same handover allowed PLMN identification from a handover allowed PLMN identification corresponding to the same PLMN identification in the first PLMN identification list and the second PLMN identification list;
establishing, by the base station, a third reference PLMN identification list according to the same PLMN identification and the same handover allowed PLMN identification;
acquiring, by the base station, a handover allowed PLMN identification corresponding to each first identification currently supported by the base station from the third reference PLMN identification list; and
controlling, by the base station according to the handover allowed PLMN identification, the user equipment to be handed over between PLMN identifications.

The first PLMN identification list further includes: network standard indication information, used for indicating a network standard of the PLMN identification.

Before the acquiring, by the base station, a first PLMN identification list, the method includes:
configuring, by the base station, a handover indicator, where the handover indicator is used for indicating whether handover between PLMN identifications is to be performed.

According to an aspect, a base station supporting different PLMNs is provided, including:
a handover unit, configured to control, according to a first PLMN identification list, user equipment to be handed over between PLMN identifications, where the handover between the PLMN identifications includes network handover and network redirection;
a receiving unit, configured to receive a second PLMN identification list sent by a mobility management entity MME, where the second PLMN identification list is used for indicating a handover allowed PLMN identification corresponding to the user equipment that the base station currently serves; and
the base station being characterized by further comprising:
   an acquiring unit, configured to acquire the first PLMN identification list, where the first PLMN identification list is configured by the base station and is used for indicating a handover allowed PLMN identification corresponding to each first identification currently supported by the base station, and the first identification includes one or more of a base station identification, an operator identifier, and a cell identifier.

The base station further includes:
a configuring unit, configured to configure the first PLMN identification list.

The first PLMN identification list further includes: a reference indication identifier, used for indicating a first reference PLMN identification list according to which the base station performs handover between PLMN identifications, where the first reference PLMN identification list is the first PLMN identification list or the second PLMN identification list; and the handover unit is specifically configured to:
acquire the first reference PLMN identification list indicated by the reference indication identifier in the first PLMN identification list;
acquire a handover allowed PLMN identification corresponding to each first identification currently supported from the first reference PLMN identification list; and
control, according to the handover allowed PLMN identification, the user equipment to be handed over between PLMN identifications.

The handover unit is specifically configured to:
acquire all PLMN identifications that are in the first PLMN identification list and second PLMN identification list and handover allowed PLMN identifications corresponding to the PLMN identifications as a second reference PLMN identification list;
acquire a handover allowed PLMN identification corresponding to each currently supported first identification from the second reference PLMN identification list; and
control, according to the handover allowed PLMN identification, the user equipment to be handed over between PLMN identifications.

The handover unit is specifically configured to:
acquire a same PLMN identification from the first PLMN identification list and the second PLMN identification list;
acquire a same handover allowed PLMN identification from a handover allowed PLMN identification corresponding to the same PLMN identification in the first PLMN identification list and the second PLMN identification list;
establish a third reference PLMN identification list according to the same PLMN identification and the same handover allowed PLMN identification;
acquire a handover allowed PLMN identification corresponding to each currently supported first identification from the third reference PLMN identification list; and
control, according to the handover allowed PLMN identification, the user equipment to be handed over between PLMN identifications.

The first PLMN identification list further includes: network standard indication information, used for indicating a network standard of the PLMN identification.

The acquiring unit is specifically configured to:
configure a handover indicator, where the handover indicator is used for indicating whether handover between PLMN identifications is to be performed.

According to an aspect, a communications network is provided, including:
any base station described above.

The embodiments of the present invention provide a method for handover between public land mobile network identifications and a base station. The method for handover between PLMN identifications includes: acquiring, by a base station, a first PLMN identification list, where the first PLMN identification list is configured by the base station and is used for indicating a handover allowed PLMN identification corresponding to each first identification currently supported by the base station, and the first identification includes one or more of a base station identification, an operator identifier, and a cell identifier; and controlling, by the base station according to the first PLMN identification list, user equipment to be handed over between PLMN identifications, where the handover between the PLMN identifications includes network handover and network redirection. In this way, when a core network does not support an HRL, the base station may acquire the first PLMN identification list configured by the base station, and control, according to the first PLMN identification list, the user equipment to be handed over between PLMN identifications, so as to implement handover of the user equipment between PLMN identifications when the core network does not support an HRL.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for handover between PLMN identifications according to an embodiment of the present invention;
FIG. 2 is a flowchart of another method for handover between PLMN identifications according to an embodiment of the present invention;
FIG. 3 is a schematic structural diagram of a base station according to an embodiment of the present invention;
FIG. 4 is a schematic structural diagram of another base station according to an embodiment of the present invention;
FIG. 5 is a schematic structural diagram of still another base station according to an embodiment of the present invention; and
FIG. 6 is a schematic structural diagram of yet another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

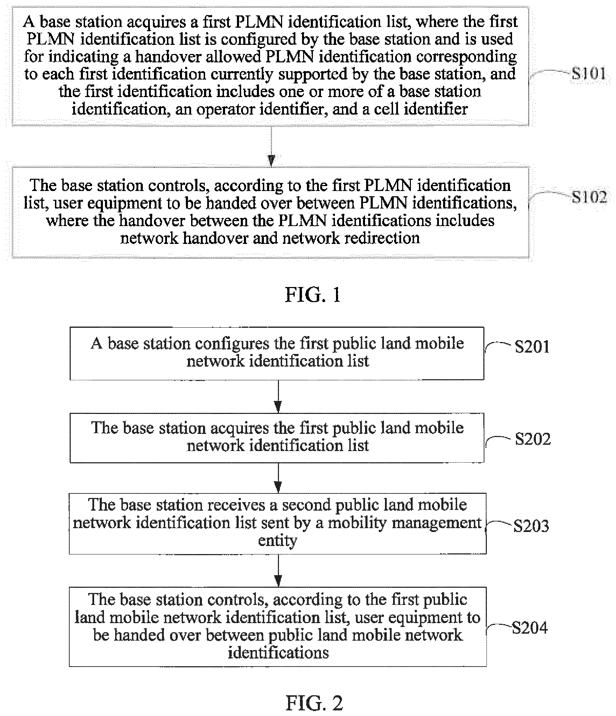

An embodiment of the present invention provides a method for handover between PLMN identifications, as shown in FIG. 1, including:
S101: A base station acquires a first PLMN identification list, where the first PLMN identification list is configured by the base station and is used for indicating a handover allowed PLMN identification corresponding to each first identification currently supported by the base station, and the first identification includes one or more of a base station identification, an operator identifier, and a cell identifier.
S102: The base station controls, according to the first PLMN identification list, user equipment to be handed over between PLMN identifications, where the handover between the PLMN identifications includes network handover and network redirection.

It should be noted that, each of the PLMN identification indicates a corresponding network, and when the user equipment is handed over between PLMN identifications, the user equipment is handed over between networks corresponding to the PLMN identifications. The handover between the networks includes network handover and network redirection.

In this case, when a core network does not support an HRL, the base station may acquire the first PLMN identification list configured by the base station, and control, according to the first PLMN identification list, the user equipment to be handed over between PLMN identifications, so as to implement handover of the user equipment between PLMN identifications when the core network does not support an HRL.

It should be noted that, the first identification in this embodiment of the present invention may be a base station identification, and may also be an operator identifier or a cell identifier, and may be set according to a specific network handover requirement of an actual communications network. Handover between PLMN identifications indicates that a network indicated by a corresponding first identification is changed. Specific handover between PLMN identifications includes two cases: network handover and network redirection. The network handover is handover from one cell to another cell to keep a call in a connected state; and the redirection is disconnecting the user equipment from one cell and then connecting the user equipment to another cell.

Particularly, the base station may configure the first PLMN identification list, and directly perform handover according to the first PLMN identification list when handover between PLMN identifications is required. Because the base station may also receive a second PLMN identification list sent by a mobility management entity MME, the base station may also process PLMN identifications in the first PLMN identification list and the second PLMN identification list according to a preset rule, and control, according to a processed PLMN identification list, the user equipment to be handed over between PLMN identifications.

Exemplarily, an embodiment of the present invention provides another method for handover between PLMN identifications, as shown in FIG. 2, including:
S201: A base station configures the first PLMN identification list.

The first PLMN identification list is used for indicating a handover allowed PLMN identification corresponding to each first identification currently supported by the base station. The base station controls, according to the first PLMN identification list, user equipment to be handed over between PLMN identifications.

It should be noted that, the first identification may include one or more of a base station identification, an operator identifier, and a cell identifier. That the base station currently supports the first identification indicates that the base station currently serves a device corresponding to the first identification. Exemplarily, if the first identification is a base station identification, that the base station currently supports the first identification indicates that the base station provides a service for a device indicated by the base station identification. Therefore, the handover allowed PLMN identification corresponding to each first identification currently supported by the base station may also be referred to as a handover allowed PLMN identification corresponding to each first identification currently served by the base station.

When the first identification is an operator identifier, the handover allowed PLMN identification may further include an identifier of an operator served by another base station. The another base station refers to a base station except a base station that currently provides a service for an operator corresponding to the first identification.

A form of the first PLMN identification list may be as shown in Table 1. Exemplarily, it is assumed that each first identification in the base station indicates an operator that the base station serves. As shown in Table 1, 00 001, 00 002, and 00 003 are three first identifications of operators served by the base station. 00 001 indicates an operator A, 00 002 indicates an operator B, and 00 003 indicates an operator C. When the first identification is 00 001 and indicates the operator A, corresponding handover allowed PLMN identifications are 00 001 and 00 002 respectively that respectively indicate the operator A and the operator B correspondingly; when the first identification is 00 002 and indicates the operator B, corresponding handover allowed PLMN identifications are 00 002, 00 003 and 00 005 respectively that respectively indicate the operator B, the operator C, and an operator E correspondingly; when the first identification is 00 003 and indicates the operator C, corresponding handover allowed PLMN identifications are 00 002, 00 003 and 00 006 that respectively indicate the operator C, the operator B, and an operator F correspondingly. It can be seen that, 00 005 and 00 006 may indicate operators served by another base station except the current serving base station.

**Table 1**

| **First identification** | | **Handover allowed PLMN identification** |
|---|---|---|
| First identification-1 | 00 001 | 00 001 |
| | | 00 002 |
| First identification-2 | 00 002 | 00 002 |
| | | 00 003 |
| | | 00 005 |
| First identification-3 | 00 003 | 00 002 |
| | | 00 003 |
| | | 00 006 |

Particularly, when the first PLMN identification list is configured, it is generally defaulted that a handover allowed PLMN identification corresponding to a first identification-X in a network served by the base station includes a network served by the first identification-X. Exemplarily, when the first identification-X is 00 001, a corresponding handover allowed PLMN identification includes 00 001. Therefore, when the first PLMN identification list is configured, the handover allowed PLMN identification corresponding to the first identification-X in the network served by the base station may not directly indicate the network served by the first identification-X, but when the base station controls the user equipment to be handed over between PLMN identifications, it is defaulted that the handover allowed PLMN identification corresponding to the first identification-X in the network served by the base station includes the network served by the first identification-X.

Further, the first identification may be a base station identification. As shown in Table 2, assuming that 1 indicates the current base station, handover allowed PLMN identifications corresponding to the current base station 1 are 00 001, 00 002, and 00 003 respectively that respectively indicate an operator A, an operator B, and an operator C correspondingly.

**Table 2**

| **First identification** | | **Handover allowed PLMN identification** |
|---|---|---|
| First identification-1 | 1 | 00 001 |
| | | 00 002 |
| | | 00 003 |

The first identification may also be an identifier of a cell n in the current serving base station, and the cell n is a cell in the base station. As shown in Table 3, it is assumed that c1 indicates a cell 1 in the current serving base station, c2 indicates a cell 2 in the current serving base station, and c3 indicates a cell 3 in the current serving base station. It can be known from Table 3 that, handover allowed PLMN identifications corresponding to the cell 2 are 00 002, 00 003, and 00 005 that respectively indicate an operator B, an operator C, and an operator E correspondingly. Similarly, handover allowed PLMN identifications corresponding to the cell 1 and the cell 3 may be obtained.

**Table 3**

| **First identification** | | **Handover allowed PLMN identification** |
|---|---|---|
| First identification-1 | c1 | 00 001 |
| | | 00 002 |
| First identification-2 | c2 | 00 002 |
| | | 00 003 |
| | | 00 005 |
| First identification-3 | c3 | 00 002 |
| | | 00 003 |
| | | 00 006 |

Particularly, a form of the first PLMN identification list may be as shown in Table 4. The table indicates a handover allowed PLMN identification corresponding to a cell served by an operator in the current base station. Exemplarily, in Table 4, the first identification indicates cells c1, c2, c3 in the current base station, and indicates PLMN identifications of operator serving the cells. As shown in Table 4, when the first identification indicates the cell c1 served by an operator, identified with 00 001, in the current base station, handover allowed PLMN identifications corresponding to the cell c1 are 00 001 and 00 003 that respectively indicate an operator A and an operator C correspondingly; when the first identification indicates the cell c1 served by an operator, identified with 00 002, in the current base station, handover allowed PLMN identifications corresponding to the cell c1 are 00 002 and 00 004 that respectively indicate an operator B and an operator D correspondingly; when the first identification indicates the cell c2 served by the operator, identified with 00 001, in the current base station, handover allowed PLMN identifications corresponding to the cell c2 are 00 001 and 00 003 that respectively indicate the operator A and the operator C correspondingly; when the first identification indicates the cell c3 served by the operator, identified with 00 002, in the current base station, handover allowed PLMN identifications corresponding to the cell c3 are 00 002 and 00 004 that respectively indicate the operator B and the operator D correspondingly.

**Table 4**

| **First identification** | | | **Handover allowed PLMN identification** |
|---|---|---|---|
| First identification-1 | c1 | 00 001 | 00 001 |
| | | | 00 003 |
| | | 00 002 | 00 002 |
| | | | 00 004 |
| First identification-2 | c2 | 00 001 | 00 001 |
| | | | 00 003 |
| First identification-3 | c3 | 00 002 | 00 002 |
| | | | 00 004 |
| | | | 00 004 |

S202: The base station acquires the first PLMN identification list.

S203: The base station receives a second PLMN identification list sent by a mobility management entity MME.

The second PLMN identification list is used for indicating a handover allowed PLMN identification corresponding to the current user equipment.

Exemplarily, it is assumed that a form of the second PLMN identification list is shown in Table 5.

**Table 5**

| **Handover allowed PLMN identification for current UE** |
|---|
| 00 001 |
| 00 002 |

It should be noted that, the second PLMN identification list indicates the handover allowed PLMN identification corresponding to the current user equipment.

S204: The base station controls, according to the first PLMN identification list, user equipment to be handed over between PLMN identifications.

Because the base station configures the first PLMN identification list, and receives the second PLMN identification list sent by the mobility management entity MME, a handover allowed PLMN identification corresponding to the current user equipment may be found according to the following method: First, a first identification of the current user equipment may be found in the first PLMN identification list according to a PLMN identification of an operator that provides a service for the current user equipment and identifiers of a base station and a cell that provide a service for the current user equipment, or a cell identifier and a PLMN identification; next, a handover allowed PLMN identification corresponding to the first identification of the user equipment is found in the first PLMN identification list; then, a handover allowed PLMN identification corresponding to the current UE is acquired from the mobility management entity MME, that is, the handover allowed PLMN identification corresponding to the current user equipment is acquired from the second PLMN identification list; and last, an intersection set or a union set of the handover allowed PLMN identification corresponding to the current user equipment and acquired from the first PLMN identification list and the handover allowed PLMN identification corresponding to the current user equipment and acquired from the second PLMN identification list is obtained, so as to obtain a final handover allowed PLMN identification corresponding to the current user equipment, and the user equipment is handed over according to the final handover allowed PLMN identification corresponding to the current user equipment.

It should be noted that, a method for acquiring a PLMN identification of an operator providing a service for current user equipment and identifiers of a base station and a cell that provide a service for the current user equipment belongs to the prior art and is not described herein.

Particularly, for two given sets A and B, an intersection set refers to a set including only all elements that belong to both A and B, and a union set is a set consisting of all elements that belong to the set A or the set B.

Exemplarily, the first PLMN identification list may further include: a reference indication identifier, used for indicating a first reference PLMN identification list according to which the base station performs handover between PLMN identifications, where the first reference PLMN identification list is the first PLMN identification list or the second PLMN identification list. Assuming that a reference indication identifier of 0 indicates the first PLMN identification list, and a reference indication identifier of 1 indicates the second PLMN identification list, a first reference PLMN identification list may be determined according to a corresponding reference indication identifier. Exemplarily, assuming that each first identification in the base station indicates an operator that the base station serves, the reference indication identifier in the first PLMN identification list may be as shown in Table 6. It should be noted that, when the first identification is a base station identification or a cell identifier, reference may be made to Table 6 to set the first reference PLMN identification list.

**Table 6**

| **First identification** | | **Reference indication identifier** | **Handover allowed PLMN identification** |
|---|---|---|---|
| First identification-1 | 00 001 | 0 | 00 001 |
| | | | 00 002 |
| First identification-2 | 00 002 | 1 | 00 002 |
| | | | 00 003 |
| | | | 00 005 |
| First identification-3 | 00 003 | 0 | 00 003 |
| | | | 00 002 |
| | | | 00 006 |

Correspondingly, the controlling, by the base station according to the first PLMN identification list, user equipment to be handed over between PLMN identifications includes: acquiring, by the base station, the first reference PLMN identification list indicated by the reference indication identifier in the first PLMN identification list; acquiring, by the base station, a handover allowed PLMN identification corresponding to the first identification from the first reference PLMN identification list; and controlling, by the base station according to the handover allowed PLMN identification, the user equipment to be handed over between PLMN identifications.

Particularly, the first PLMN identification list may further include: network standard indication information, used for indicating a network standard of the PLMN identification. The network standard indication information indicates a network standard of each first identification and the handover allowed PLMN identification corresponding to each first identification, and therefore, correspondingly, in the process of handover between PLMN identifications, the user equipment may be handed over to a same PLMN identification having a different network standard. Network division for handover is finer. The network standard refers to a network type, and in this embodiment of the present invention, may include: LTE (Long Term Evolution, Long Term Evolution), UMTS (Universal Mobile Telecommunications System, Universal Mobile Telecommunications System), GSM (Global System for Mobile communications, Global System for Mobile Communications), and the like.

Exemplarily, the base station obtains an intersection set of a PLMN identification in the first PLMN identification list and a PLMN identification in the second PLMN identification list, so as to obtain a new PLMN identification list. The process specifically includes: First, a first identification of the current user equipment may be found in the first PLMN identification list according to a PLMN identification of an operator that provides a service for the current user equipment and identifiers of a base station and a cell that provide a service for the current user equipment, or a cell identifier and a PLMN identification; next, a handover allowed PLMN identification corresponding to the first identification of the user equipment is found in the first PLMN identification list; then, a handover allowed PLMN identification corresponding to the current UE is acquired from the mobility management entity MME, that is, the handover allowed PLMN identification corresponding to the current user equipment is acquired from the second PLMN identification list; and last, an intersection set of the handover allowed PLMN identification corresponding to the current user equipment and acquired from the first PLMN identification list and the handover allowed PLMN identification corresponding to the current user equipment and acquired from the second PLMN identification list is obtained, so as to obtain a final handover allowed PLMN identification corresponding to the current user equipment, and the user equipment is handed over according to the final handover allowed PLMN identification corresponding to the current user equipment.

Exemplarily, when the first identification in the first PLMN identification list indicates an operator, assuming that the acquired PLMN identification of the operator serving the current user equipment is 00 001, a first identification 00 001 may be found in Table 1 and handover allowed PLMN identifications 00 001 and 00 002 corresponding to the first identification 00 001 are found correspondingly. Assuming that the second identification list, acquired from the MME, of the current user equipment is shown in Table 5, it can be known from Table 5 that, handover allowed PLMN identifications corresponding to the current user equipment are 00 001 and 00 002, and then, an intersection set of the handover allowed PLMN identifications corresponding to the current user equipment and acquired from the first PLMN identification list and the handover allowed PLMN identifications corresponding to the current user equipment and acquired from the second PLMN identification list is obtained, so that it may be obtained that final handover allowed PLMN identifications corresponding to the current user equipment are 00 001 and 00 002, as shown in Table 7.

**Table 7**

| **First identification** | **Handover allowed PLMN identification** |
|---|---|
| 00 001 | 00 001 |
| | 00 002 |

Exemplarily, when the first identification in the first PLMN identification list indicates a base station, assuming that it is acquired that an identifier of a base station to which the current user equipment is connected is 1, a first identification 1 may be found in Table 2 and handover allowed PLMN identifications 00 001, 00 002, and 00 003 corresponding to the first identification 1 are found correspondingly. Assuming that the second identification list, acquired from the MME, of the current user equipment is shown in Table 5, it can be known from Table 5 that, handover allowed PLMN identifications corresponding to the current user equipment are 00 001 and 00 002, and then, an intersection set of the handover allowed PLMN identifications corresponding to the current user equipment and acquired from the first PLMN identification list and the handover allowed PLMN identifications corresponding to the current user equipment and acquired from the second PLMN identification list is obtained, so that it may be obtained that final handover allowed PLMN identifications corresponding to the current user equipment are 00 001 and 00 002, as shown in Table 8.

**Table 8**

| **First identification** | **Handover allowed PLMN identification** |
|---|---|
| 1 | 00 001 |
| | 00 002 |

Exemplarily, when the first identification in the first PLMN identification list indicates a cell, assuming that it is acquired that an identifier of a cell to which the current user equipment is connected is c2, a first identification c2 may be found in Table 3 and handover allowed PLMN identifications 00 002, 00 003, and 00 005 corresponding to the first identification c2 are found correspondingly. Assuming that the second identification list, acquired from the MME, of the current user equipment is shown in Table 5, it can be known from Table 5 that, handover allowed PLMN identifications corresponding to the current user equipment are 00 001 and 00 002, and then, an intersection set of the handover allowed PLMN identifications corresponding to the current user equipment and acquired from the first PLMN identification list and the handover allowed PLMN identifications corresponding to the current user equipment and acquired from the second PLMN identification list is obtained, so that it may be obtained that a final handover allowed PLMN identification corresponding to the current user equipment is 00 002, as shown in Table 9.

**Table 9**

| **First identification** | **Handover allowed PLMN identification** |
|---|---|
| c2 | 00 002 |

Exemplarily, when the first identification in the first PLMN identification list indicates an operator and a cell, assuming that it is acquired that a PLMN identification of an operator providing a service for the current user equipment is 00 002 and an identifier of a cell to which the user equipment is connected is c2, first identifications c1 and 00 002 may be found in Table 4 and handover allowed PLMN identifications 00 002 and 00 004 corresponding to the first identifications c1 and 00 002 are found correspondingly. Assuming that the second identification list, acquired from the MME, of the current user equipment is shown in Table 5, it can be known from Table 5 that, handover allowed PLMN identifications corresponding to the current user equipment are 00 001 and 00 002, and then, an intersection set of the handover allowed PLMN identifications corresponding to the current user equipment and acquired from the first PLMN identification list and the handover allowed PLMN identifications corresponding to the current user equipment and acquired from the second PLMN identification list is obtained, so that it may be obtained that a final handover allowed PLMN identification corresponding to the current user equipment is 00 002, as shown in Table 10.

**Table 10**

| **First identification** | | **Handover allowed PLMN identification** |
|---|---|---|
| c1 | 00 002 | 00 002 |

Exemplarily, obtaining, by the base station, a union set of PLMN identifications in the first PLMN identification list and the second PLMN identification list, so as to obtain a new PLMN identification list includes:

First, a first identification of the current user equipment may be found in the first PLMN identification list according to a PLMN identification of an operator that provides a service for the current user equipment and identifiers of a base station and a cell that provide a service for the current user equipment, or a cell identifier and a PLMN identification; next, a handover allowed PLMN identification corresponding to the first identification of the user equipment is found in the first PLMN identification list; then, a handover allowed PLMN identification corresponding to the current UE is acquired from the mobility management entity MME, that is, the handover allowed PLMN identification corresponding to the current user equipment is acquired from the second PLMN identification list; and last, a union set of the handover allowed PLMN identification corresponding to the current user equipment and acquired from the first PLMN identification list and the handover allowed PLMN identification corresponding to the current user equipment and acquired from the second PLMN identification list is obtained, so as to obtain a final handover allowed PLMN identification corresponding to the current user equipment, and the user equipment is handed over according to the final handover allowed PLMN identification corresponding to the current user equipment.

Exemplarily, when the first identification in the first PLMN identification list indicates an operator, assuming that it is acquired that a PLMN identification of an operator serving the current user equipment is 00 002, a first identification 00 002 may be found in Table 1 and handover allowed PLMN identifications 00 002, 00 003, and 00 005 corresponding to the first identification 00 002 are found correspondingly. Assuming that the second identification list, acquired from the MME, of the current user equipment is shown in Table 5, it can be known from Table 5 that, handover allowed PLMN identifications corresponding to the current user equipment are 00 001 and 00 002, and then, a union set of the handover allowed PLMN identifications corresponding to the current user equipment and acquired from the first PLMN identification list and the handover allowed PLMN identifications corresponding to the current user equipment and acquired from the second PLMN identification list is obtained, so that it may be obtained that final handover allowed PLMN identifications corresponding to the current user equipment are 00 001, 00 002, 00 003, and 00 005, as shown in Table 11.

**Table 11**

| **First identification** | **Handover allowed PLMN identification** |
|---|---|
| 00 002 | 00 001 |
| | 00 002 |
| | 00 003 |
| | 00 005 |

When the first identification in the first PLMN identification list indicates a base station, a cell, or a cell and an operator, reference may be made to the method in which a union set is obtained when the first identification in the first PLMN identification list indicates an operator, so as to obtain a handover allowed PLMN identification corresponding to the current user equipment. Details are not described herein.

Particularly, the first PLMN identification list may further include a handover indicator and the handover indicator is used for indicating whether handover between PLMN identifications is to be performed.

When the handover indicator indicates that handover between PLMN identifications is to be performed, the base station controls, according to a PLMN identification acquired by the user equipment by measurement, the user equipment to be handed over between PLMN identifications; and when the handover indicator indicates that handover between PLMN identifications is not to be performed, the base station forbids the user equipment to be handed over between PLMN identifications.

Particularly, when the base station controls, according to the first PLMN identification list, the user equipment to be handed over between PLMN identifications, a handover method and process belong to the prior art, and are not described herein.

It should be noted that, an order of steps of the method for handover between PLMN identifications provided in this embodiment of the present invention may be appropriately adjusted, and a step may also be correspondingly added to or removed from the steps according to an actual situation. Any changing method readily figured out by a person skilled in the art within the technical scope disclosed in the present invention shall fall within the protection scope of the present invention.

According to the method for handover between PLMN identifications provided in this embodiment of the present invention, when a core network does not support an HRL, a base station may acquire a first PLMN identification list configured by the base station, and control, according to the first PLMN identification list, user equipment to be handed over between PLMN identifications, so as to implement handover of the user equipment between PLMN identifications when the core network does not support an HRL. Moreover, when the base station configures the first PLMN identification list and receives a second PLMN identification list, the base station may also flexibly implement, according to a preset rule, control of the user equipment to be handed over between PLMN identifications.

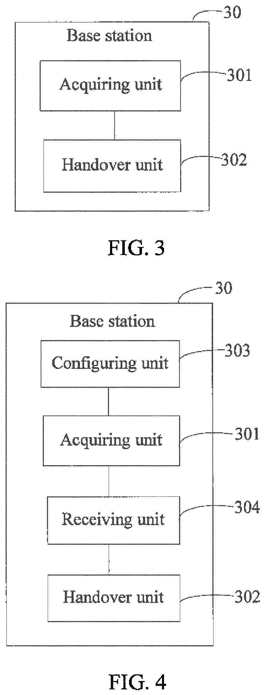

An embodiment of the present invention provides a base station 30, as shown in FIG. 3, including an acquiring unit 301 and a handover unit 302.

The acquiring unit 301 is configured to acquire a first PLMN identification list, where the first PLMN identification list is configured by the base station and is used for indicating a handover allowed PLMN identification corresponding to each first identification currently supported by the base station, and the first identification includes one or more of a base station identification, an operator identifier, and a cell identifier; and send the first PLMN identification list to the handover unit 302.

The first identification includes one or more of a base station identification, an operator identifier, and a cell identifier. The first identification may be an identifier of an operator m in the base station, and the operator m is an operator covering the base station; or the first identification is an identifier of a cell n in the base station, and the cell n is a cell in the base station; or the first identification is an identification of the base station k, and the base station k is a current serving base station.

The handover unit 302 is configured to receive the first PLMN identification list sent by the acquiring unit 301 and control, according to the first PLMN identification list, user equipment to be handed over between PLMN identifications, where the handover between the PLMN identifications includes network handover and network redirection.

In this way, when a core network does not support an HRL, the acquiring unit may acquire the first PLMN identification list configured by the base station, and the handover unit controls, according to the first PLMN identification list, the user equipment to be handed over between PLMN identifications, so as to implement handover of the user equipment between PLMN identifications when the core network does not support an HRL.

Further, as shown in FIG. 4, the base station 30 further includes:
a configuring unit 303, configured to configure the first PLMN identification list; and
a receiving unit 304, configured to receive a second PLMN identification list sent by a mobility management entity MME, where the second PLMN identification list is used for indicating a handover allowed PLMN identification corresponding to user equipment that the base station currently serves.

The first PLMN identification list further includes: a reference indication identifier, used for indicating a first reference PLMN identification list according to which the base station performs handover between PLMN identifications, where the first reference PLMN identification list is the first PLMN identification list or the second PLMN identification list.

The handover unit 302 is specifically configured to:
acquire the first reference PLMN identification list indicated by the reference indication identifier in the first PLMN identification list; acquire a handover allowed PLMN identification corresponding to each currently supported first identification from the first reference PLMN identification list; and control, according to the handover allowed PLMN identification, the user equipment to be handed over between PLMN identifications.

The handover unit 302 is further configured to:
acquire all PLMN identifications that are in the first PLMN identification list and second PLMN identification list and handover allowed PLMN identifications corresponding to the PLMN identifications as a second reference PLMN identification list; acquire a handover allowed PLMN identification corresponding to each currently supported first identification from the second reference PLMN identification list; and control, according to the handover allowed PLMN identification, the user equipment to be handed over between PLMN identifications.

The handover unit 302 is further configured to:
acquire a same PLMN identification from the first PLMN identification list and the second PLMN identification list; acquire a same handover allowed PLMN identification from a handover allowed PLMN identification corresponding to the same PLMN identification in the first PLMN identification list and the second PLMN identification list; establish a third reference PLMN identification list according to the same PLMN identification and the same handover allowed PLMN identification; acquire a handover allowed PLMN identification corresponding to each currently supported first identification from the third reference PLMN identification list; and control, according to the handover allowed PLMN identification, the user equipment to be handed over between PLMN identifications.

Particularly, the first PLMN identification list may further include: network standard indication information, used for indicating a network standard of the PLMN identification.

The first PLMN identification list may further include a handover indicator, and the handover indicator is used for indicating whether handover between PLMN identifications is to be performed.

The handover unit 302 is further configured to configure the handover indicator, where the handover indicator is used for indicating whether handover between PLMN identifications is to be performed.

It may be clearly understood by a person skilled in the art that, for the purpose of convenient and brief description, for detailed steps related to the foregoing described units, reference may be made to corresponding processes in the embodiment of the method for handover PLMN identifications, and details are not described herein again.

According to the base station provided in this embodiment of the present invention, when a core network does not support an HRL, an acquiring unit may acquire a first PLMN identification list configured by the base station, and a handover unit controls, according to the first PLMN identification list, user equipment to be handed over between PLMN identifications, so as to implement handover of the user equipment between PLMN identifications when the core network does not support an HRL.

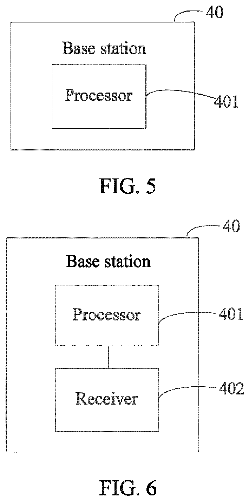

An embodiment of the present invention provides a base station 40, as shown in FIG. 5, including:
a processor 401, configured to acquire a first PLMN identification list, where the first PLMN identification list is configured by the base station and is used for indicating a handover allowed PLMN identification corresponding to each first identification currently supported by the base station, and the first identification includes one or more of a base station identification, an operator identifier, and a cell identifier.

The first identification may be an identifier of an operator in the base station, and the operator is an operator covering the base station; or the first identification is an identifier of a cell in the base station, and the cell is a cell in the base station; or the first identification is an identification of the base station, and the base station is a current serving base station.

The processor 401 is further configured to configure the first PLMN identification list.

The processor 401 is further configured to control, according to the first PLMN identification list, user equipment to be handed over between PLMN identifications.

In this way, when a core network does not support an HRL, the processor may acquire the first PLMN identification list configured by the base station, and control, according to the first PLMN identification list, the user equipment to be handed over between PLMN identifications, so as to implement handover of the user equipment between PLMN identifications when the core network does not support an HRL.

Further, as shown in FIG. 6, the base station 40 further includes:
a receiver 402, configured to receive a second PLMN identification list sent by a mobility management entity MME, where the second PLMN identification list is used for indicating a handover allowed PLMN identification corresponding to user equipment that the base station currently serves.

The first PLMN identification list further includes: a reference indication identifier, used for indicating a first reference PLMN identification list according to which the base station performs handover between PLMN identifications, where the first reference PLMN identification list is the first PLMN identification list or the second PLMN identification list.

The processor 401 is further configured to:
acquire the first reference PLMN identification list indicated by the reference indication identifier in the first PLMN identification list; acquire a handover allowed PLMN identification corresponding to each currently supported first identification from the first reference PLMN identification list; and control, according to the handover allowed PLMN identification, the user equipment to be handed over between PLMN identifications.

The processor 401 is further configured to:
acquire all PLMN identifications that are in the first PLMN identification list and second PLMN identification list and handover allowed PLMN identifications corresponding to the PLMN identifications as a second reference PLMN identification list; acquire a handover allowed PLMN identification corresponding to each currently supported first identification from the second reference PLMN identification list; and control, according to the handover allowed PLMN identification, the user equipment to be handed over between PLMN identifications.

The processor 401 is further configured to:
acquire a same PLMN identification from the first PLMN identification list and the second PLMN identification list; acquire a same handover allowed PLMN identification from a handover allowed PLMN identification corresponding to the same PLMN identification in the first PLMN identification list and the second PLMN identification list; establish a third reference PLMN identification list according to the same PLMN identification and the same handover allowed PLMN identification; acquire a handover allowed PLMN identification corresponding to each currently supported first identification from the third reference PLMN identification list; and control, according to the handover allowed PLMN identification, the user equipment to be handed over between PLMN identifications.

Particularly, the first PLMN identification list may further include: network standard indication information, used for indicating a network standard of the PLMN identification.

The first PLMN identification list may further include a handover indicator, and the handover indicator is used for indicating whether handover between PLMN identifications is to be performed.

The processor 401 is further configured to configure the handover indicator, where the handover indicator is used for indicating whether handover between PLMN identifications is to be performed.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

## Claims

1. A method for handover between public land mobile network PLMN identifications, comprising:
controlling, by a base station (30,40) supporting different PLMNs according to a first PLMN identification list, user equipment to be handed over between PLMN identifications, wherein the handover between the PLMN identifications comprises network handover and network redirection;
receiving, by the base station (30,40), a second PLMN identification list sent by a mobility management entity MME, wherein the second PLMN identification list is used for indicating a handover allowed PLMN identification corresponding to the user equipment that the base station (30,40) currently serves; and
the method being **characterized by** further comprising:
acquiring, by the base station (30,40), the first PLMN identification list, wherein the first PLMN identification list is configured by the base station (30,40) and is used for indicating a handover allowed PLMN identification corresponding to each first identification currently supported by the base station (30,40), and the first identification comprises one or more of a base station identification, an operator identifier, and a cell identifier.

2. The method according to claim 1, wherein the first PLMN identification list further comprises: a reference indication identifier, used for indicating a first reference PLMN identification list according to which the base station (30,40) performs handover between PLMN identifications, wherein the first reference PLMN identification list is the first PLMN identification list or the second PLMN identification list; and
the controlling, by the base station (30,40) according to the first PLMN identification list, user equipment to be handed over between PLMN identifications comprises:
acquiring, by the base station (30,40), the first reference PLMN identification list indicated by the reference indication identifier in the first PLMN identification list;
acquiring, by the base station (30,40), a handover allowed PLMN identification corresponding to each first identification currently served by the base station (30,40) from the first reference PLMN identification list; and
controlling, by the base station (30,40) according to the handover allowed PLMN identification, the user equipment to be handed over between PLMN identifications.

3. The method according to claim 1, wherein the controlling, by the base station (30,40) according to the first PLMN identification list, user equipment to be handed over between PLMN identifications comprises:
acquiring, by the base station (30,40), all PLMN identifications that are in the first PLMN identification list and second PLMN identification list and handover allowed PLMN identifications corresponding to the PLMN identifications as a second reference PLMN identification list;
acquiring, by the base station (30,40), a handover allowed PLMN identification corresponding to each first identification currently supported by the base station (30,40) from the second reference PLMN identification list; and
controlling, by the base station (30,40) according to the handover allowed PLMN identification, the user equipment to be handed over between PLMN identifications.

4. The method according to claim 1, wherein the controlling, by the base station (30,40) according to the first PLMN identification list, user equipment to be handed over between PLMN identifications comprises:
acquiring, by the base station (30,40), a same PLMN identification from the first PLMN identification list and the second PLMN identification list;
acquiring, by the base station (30,40), a same handover allowed PLMN identification from a handover allowed PLMN identification corresponding to the same PLMN identification in the first PLMN identification list and the second PLMN identification list;
establishing, by the base station (30,40), a third reference PLMN identification list according to the same PLMN identification and the same handover allowed PLMN identification;
acquiring, by the base station (30,40), a handover allowed PLMN identification corresponding to each first identification currently supported by the base station (30,40) from the third reference PLMN identification list; and
controlling, by the base station (30,40) according to the handover allowed PLMN identification, the user equipment to be handed over between PLMN identifications.

5. The method according to any one of the preceding claims, wherein the first PLMN identification list further comprises: network standard indication information, used for indicating a network standard of the PLMN identification.

6. The method according to claim 1, wherein before the acquiring, by the base station (30,40), a first PLMN identification list, the method comprises:
configuring, by the base station (30,40), a handover indicator, wherein the handover indicator is used for indicating whether handover between PLMN identifications is to be performed.

7. A base station (30,40) supporting different PLMNs, comprising:
a handover unit (302), configured to control, according to a first PLMN identification list, user equipment to be handed over between PLMN identifications, wherein the handover between the PLMN identifications comprises network handover and network redirection;
a receiving unit (304), configured to receive a second PLMN identification list sent by a mobility management entity MME, wherein the second PLMN identification list is used for indicating a handover allowed PLMN identification corresponding to the user equipment that the base station (30,40) currently serves; and
the base station (30,40) being **characterized by** further comprising:
an acquiring unit (301), configured to acquire the first PLMN identification list, wherein the first PLMN identification list is configured in the base station (30,40) and is used for indicating a handover allowed PLMN identification corresponding to each first identification currently supported by the base station (30,40), and the first identification comprises one or more of a base station identification, an operator identifier, and a cell identifier.

8. The base station (30,40) according to claim 7, wherein the base station (30,40) further comprises:
a configuring unit (303), configured to configure the first PLMN identification list.

9. The base station (30,40) according to claim 7, wherein the first PLMN identification list further comprises: a reference indication identifier, used for indicating a first reference PLMN identification list according to which the base station (30,40) performs handover between PLMN identifications, wherein the first reference PLMN identification list is the first PLMN identification list or the second PLMN identification list; and the handover unit (302) is specifically configured to:
acquire the first reference PLMN identification list indicated by the reference indication identifier in the first PLMN identification list;
acquire a handover allowed PLMN identification corresponding to each first identification currently supported by the base station (30,40) from the first reference PLMN identification list; and
control, according to the handover allowed PLMN identification, the user equipment to be handed over between PLMN identifications.

10. The base station (30,40) according to claim 7, wherein the handover unit (302) is specifically configured to:
acquire all PLMN identifications that are in the first PLMN identification list and second PLMN identification list and handover allowed PLMN identifications corresponding to the PLMN identifications as a second reference PLMN identification list;
acquire a handover allowed PLMN identification corresponding to each first identification currently supported by the base station (30,40) from the second reference PLMN identification list; and
control, according to the handover allowed PLMN identification, the user equipment to be handed over between PLMN identifications.

11. The base station (30,40) according to claim 7, wherein the handover unit (302) is specifically configured to:
acquire a same PLMN identification from the first PLMN identification list and the second PLMN identification list;
acquire a same handover allowed PLMN identification from a handover allowed PLMN identification corresponding to the same PLMN identification in the first PLMN identification list and the second PLMN identification list;
establish a third reference PLMN identification list according to the same PLMN identification and the same handover allowed PLMN identification;
acquire a handover allowed PLMN identification corresponding to each first identification currently supported by the base station (30,40) from the third reference PLMN identification list; and
control, according to the handover allowed PLMN identification, the user equipment to be handed over between PLMN identifications.

12. The base station (30,40) according to any one of claims 7 to 11, wherein the first PLMN identification list further comprises: network standard indication information, used for indicating a network standard of the PLMN identification.

13. The base station (30,40) according to claim 7, wherein the acquiring unit (301) is specifically configured to:
configure a handover indicator, wherein the handover indicator is used for indicating whether handover between PLMN identifications is to be performed.

## Patentansprüche

1. Verfahren zur Weiterreichung zwischen Identifikationen öffentlicher Landfunknetzwerke, PLMN, umfassend:
Steuern von Benutzereinrichtungen, die zwischen PLMN-Identifikationen weitergereicht werden sollen, durch eine Basisstation (30, 40), die verschiedene PLMNs unterstützt, gemäß einer ersten PLMN-Identifikationsliste, wobei die Weiterreichung zwischen den PLMN-Identifikationen Netzwerkwechsel und Netzwerkweiterleitung umfasst;
Empfangen einer zweiten PLMN-Identifikationsliste durch die Basisstation (30, 40), die von einer Mobilitätsverwaltungsentität, MME, gesendet wird, wobei die zweite PLMN-Identifikationsliste zum Anzeigen einer für Weiterreichung zugelassenen PLMN-Identifikation verwendet wird, die der Benutzereinrichtung entspricht, welche die Basisstation (30, 40) gerade versorgt; und
wobei das Verfahren **dadurch gekennzeichnet ist, dass** es ferner umfasst:
Abrufen der ersten PLMN-Identifikationsliste durch die Basisstation (30, 40), wobei die erste PLMN-Identifikationsliste durch die Basisstation (30, 40) konfiguriert und zum Anzeigen einer für Weiterreichung zugelassenen PLMN-Identifikation verwendet wird, die jeder ersten Identifikation entspricht, die gegenwärtig von der Basisstation (30, 40) unterstützt wird, und die erste Identifikation eine oder mehrere von einer Basisstationsidentifikation, einer Betreiberkennung und einer Zellkennung umfasst.

2. Verfahren nach Anspruch 1, wobei die erste PLMN-Identifikationsliste ferner umfasst: eine Referenzanzeigekennung, die zum Anzeigen einer ersten Referenz-PLMN-Identifikationsliste verwendet wird, gemäß der die Basisstation (30, 40) Weiterreichung zwischen PLMN-Identifikationen durchführt, wobei die erste Referenz-PLMN-Identifikationsliste die erste PLMN-Identifikationsliste oder die zweite PLMN-Identifikationsliste ist; und das Steuern von zwischen PLMN-Identifikationen weiterzureichenden Benutzereinrichtungen durch die Basisstation (30, 40) gemäß der ersten PLMN-Identifikationsliste umfasst:
Abrufen der ersten PLMN-Identifikationsliste, die durch die Referenzanzeigekennung in der ersten PLMN-Identifikationsliste angezeigt wird, durch die Basisstation (30, 40);
Abrufen einer für Weiterreichung zugelassenen PLMN-Identifikation, die jeder ersten Identifikation entspricht, die gegenwärtig von der Basisstation (30, 40) versorgt wird, durch die Basisstation (30, 40) aus der ersten Referenz-PLMN-Identifikationsliste; und
Steuern der zwischen PLMN-Identifikationen weiterzureichenden Benutzereinrichtungen durch die Basisstation (30, 40) gemäß der für Weiterreichung zugelassenen PLMN-Identifikation.

3. Verfahren nach Anspruch 1, wobei das Steuern von zwischen PLMN-Identifikationen weiterzureichenden Benutzereinrichtungen durch die Basisstation (30, 40) gemäß der ersten PLMN-Identifikationsliste umfasst:
Abrufen aller PLMN-Identifikationen, die in der ersten PLMN-Identifikationsliste und der zweiten PLMN-Identifikationsliste sind, und für Weiterreichung zugelassenen PLMN-Identifikationen, die den PLMN-Identifikationen entsprechen, durch die Basisstation (30, 40) als eine zweite Referenz-PLMN-Identifikationsliste;
Abrufen einer für Weiterreichung zugelassenen PLMN-Identifikation, die jeder ersten Identifikation entspricht, die gegenwärtig von der Basisstation (30, 40) unterstützt wird, durch die Basisstation (30, 40) aus der zweiten Referenz-PLMN-Identifikationsliste; und
Steuern der zwischen PLMN-Identifikationen weiterzureichenden Benutzereinrichtungen durch die Basisstation (30, 40) gemäß der für Weiterreichung zugelassenen PLMN-Identifikation.

4. Verfahren nach Anspruch 1, wobei das Steuern von zwischen PLMN-Identifikationen weiterzureichenden Benutzereinrichtungen durch die Basisstation (30, 40) gemäß der ersten PLMN-Identifikationsliste umfasst:
Abrufen einer gleichen PLMN-Identifikation durch die Basisstation (30, 40) aus der ersten PLMN-Identifikationsliste und der zweiten PLMN-Identifikationsliste; und
Abrufen einer gleichen für Weiterreichung zugelassenen PLMN-Identifikation durch die Basisstation (30, 40) aus einer für Weiterreichung zugelassenen PLMN-Identifikation, die der gleichen PLMN-Identifikation in der ersten PLMN-Identifikationsliste und der zweiten PLMN-Identifikationsliste entspricht; und
Erstellen einer dritten Referenz-PLMN-Identifikationsliste durch die Basisstation (30, 40) gemäß der gleichen PLMN-Identifikation und der gleichen, für Weiterreichung zugelassenen PLMN-Identifikation;
Abrufen einer für Weiterreichung zugelassenen PLMN-Identifikation, die jeder ersten Identifikation entspricht, die gegenwärtig von der Basisstation (30, 40) unterstützt wird, durch die Basisstation (30, 40) aus der dritten Referenz-PLMN-Identifikationsliste; und
Steuern der zwischen PLMN-Identifikationen weiterzureichenden Benutzereinrichtungen durch die Basisstation (30, 40) gemäß der für Weiterreichung zugelassenen PLMN-Identifikation.

5. Verfahren nach einem der vorhergehenden Ansprüche, wobei die erste PLMN-Identifikationsliste ferner umfasst: Netzwerkstandardanzeigeinformationen, die zum Anzeigen eines Netzwerkstandards der PLMN-Identifikation verwendet werden.

6. Verfahren nach Anspruch 1, wobei das Verfahren vor dem Abrufen einer ersten PLMN-Identifikation durch die Basisstation (30, 40) umfasst:
Konfigurieren eines Weiterreichungsindikators durch die Basisstation (30, 40), wobei der Weiterreichungsindikator verwendet wird, um anzuzeigen, ob eine Weiterreichung zwischen PLMN-Identifikationen durchgeführt werden soll.

7. Basisstation (30, 40), die verschiedene PLMNs unterstützt und umfasst:
eine Weiterreichungseinheit (302), die so konfiguriert ist, dass sie Benutzereinrichtungen, die zwischen PLMN-Identifikationen weitergereicht werden sollen, gemäß einer ersten PLMN-Identifikationsliste steuert, wobei die Weiterreichung zwischen den PLMN-Identifikationen Netzwerkwechsel und Netzwerkweiterleitung umfasst;
eine Empfangseinheit (304), die zum Empfangen einer zweiten PLMN-Identifikationsliste konfiguriert ist, die von einer Mobilitätsverwaltungsentität, MME, gesendet wird, wobei die zweite PLMN-Identifikationsliste zum Anzeigen einer für Weiterreichung zugelassenen PLMN-Identifikation verwendet wird, die der Benutzereinrichtung entspricht, welche die Basisstation (30, 40) gerade versorgt; und
wobei die Basisstation (30, 40) **dadurch gekennzeichnet ist, dass** sie ferner umfasst:
eine Abrufeinheit (301), die zum Abrufen der ersten PLMN-Identifikationsliste konfiguriert ist, wobei die erste PLMN-Identifikationsliste in der Basisstation (30, 40) konfiguriert und zum Anzeigen einer für Weiterreichung zugelassenen PLMN-Identifikation verwendet wird, die jeder ersten Identifikation entspricht, die gegenwärtig von der Basisstation (30, 40) unterstützt wird, und die erste Identifikation eine oder mehrere von einer Basisstationsidentifikation, einer Betreiberkennung und einer Zellkennung umfasst.

8. Basisstation (30, 40) nach Anspruch 7, wobei die Basisstation (30, 40) ferner umfasst:
eine Konfigurationseinheit (303), die zum Konfigurieren der ersten PLMN-Identifikationsliste konfiguriert ist.

9. Basisstation (30,40) nach Anspruch 7, wobei die erste PLMN-Identifikationsliste ferner umfasst: eine Referenzanzeigekennung, die zum Anzeigen einer ersten Referenz-PLMN-Identifikationsliste verwendet wird, gemäß der die Basisstation (30, 40) Weiterreichung zwischen PLMN-Identifikationen durchführt, wobei die erste Referenz-PLMN-Identifikationsliste die erste PLMN-Identifikationsliste oder die zweite PLMN-Identifikationsliste ist; und die Weiterreichungseinheit (302) insbesondere konfiguriert ist zum:
Abrufen der ersten PLMN-Identifikationsliste, die durch die Referenzanzeigekennung in der ersten PLMN-Identifikationsliste angezeigt wird;
Abrufen einer für Weiterreichung zugelassenen PLMN-Identifikation, die jeder ersten Identifikation entspricht, die gegenwärtig von der Basisstation (30, 40) unterstützt wird, aus der ersten Referenz-PLMN-Identifikationsliste; und
Steuern der zwischen PLMN-Identifikationen weiterzureichenden Benutzereinrichtungen gemäß der für Weiterreichung zugelassenen PLMN-Identifikation.

10. Basisstation (30, 40) nach Anspruch 7, wobei die Weiterreichungseinheit (302) insbesondere konfiguriert ist zum:
Abrufen aller PLMN-Identifikationen, die in der ersten PLMN-Identifikationsliste und der zweiten PLMN-Identifikationsliste sind, und für Weiterreichung zugelassener PLMN-Identifikationen, die den PLMN-Identifikationen entsprechen, als eine zweite Referenz-PLMN-Identifikationsliste;
Abrufen einer für Weiterreichung zugelassenen PLMN-Identifikation, die jeder ersten Identifikation entspricht, die gegenwärtig von der Basisstation (30, 40) unterstützt wird, aus der zweiten Referenz-PLMN-Identifikationsliste; und
Steuern der zwischen PLMN-Identifikationen weiterzureichenden Benutzereinrichtungen gemäß der für Weiterreichung zugelassenen PLMN-Identifikation.

11. Basisstation (30, 40) nach Anspruch 7, wobei die Weiterreichungseinheit (302) insbesondere konfiguriert ist zum:
Abrufen einer gleichen PLMN-Identifikation aus der ersten PLMN-Identifikationsliste und der zweiten PLMN-Identifikationsliste; und
Abrufen einer gleichen, für Weiterreichung zugelassenen PLMN-Identifikation aus einer für Weiterreichung zugelassenen PLMN-Identifikation, die der gleichen PLMN-Identifikation in der ersten PLMN-Identifikationsliste und der zweiten PLMN-Identifikationsliste entspricht; und
Erstellen einer dritten Referenz-PLMN-Identifikationsliste gemäß der gleichen PLMN-Identifikation und der gleichen, für Weiterreichung zugelassenen PLMN-Identifikation;
Abrufen einer für Weiterreichung zugelassenen PLMN-Identifikation, die jeder ersten Identifikation entspricht, die gegenwärtig von der Basisstation (30, 40) unterstützt wird, aus der dritten Referenz-PLMN-Identifikationsliste; und
Steuern der zwischen PLMN-Identifikationen weiterzureichenden Benutzereinrichtungen gemäß der für Weiterreichung zugelassenen PLMN-Identifikation.

12. Basisstation (30, 40) nach einem der Ansprüche 7 bis 11, wobei die erste PLMN-Identifikationsliste ferner umfasst: Netzwerkstandardanzeigeinformationen, die zum Anzeigen eines Netzwerkstandards der PLMN-Identifikation verwendet werden.

13. Basisstation (30, 40) nach Anspruch 7, wobei die Weiterreichungseinheit (301) insbesondere konfiguriert ist zum:
Konfigurieren eines Weiterreichungsindikators, wobei der Weiterreichungsindikator verwendet wird, um anzuzeigen, ob eine Weiterreichung zwischen PLMN-Identifikationen durchgeführt werden soll.

## Revendications

1. Procédé de transfert entre des identifications de réseaux mobiles terrestres publics PLMN, comprenant :
la commande, par une station de base (30,40) prenant en charge différents PLMN conformément à une première liste d'identifications de PLMN, d'un équipement utilisateur à transférer entre des identifications de PLMN, le transfert entre les identifications de PLMN comprenant un transfert de réseau et une redirection de réseau ;
la réception, par la station de base (30,40), d'une deuxième liste d'identifications de PLMN envoyée par une entité de gestion de mobilité MME, la deuxième liste d'identifications de PLMN servant à indiquer une identification de PLMN autorisée pour un transfert correspondant à l'équipement utilisateur que dessert présentement la station de base (30,40) ; et
le procédé étant **caractérisé en ce qu'**il comprend en outre :
l'acquisition, par la station de base (30,40), de la première liste d'identifications de PLMN, la première liste d'identifications de PLMN étant configurée par la station de base (30,40) et servant à indiquer une identification de PLMN autorisée pour un transfert correspondant à chaque première identification présentement prise en charge par la station de base (30,40), et la première identification comprenant un ou plusieurs d'une identification de station de base, d'un identifiant d'opérateur et d'un identifiant de cellule.

2. Procédé selon la revendication 1, dans lequel la première liste d'identifications de PLMN comprend en outre : un identifiant d'indication de référence, servant à indiquer une première liste d'identifications de PLMN de référence conformément à laquelle la station de base (30,40) réalise un transfert entre des identifications de PLMN, la première liste d'identifications de PLMN de référence étant la première liste d'identifications de PLMN ou la deuxième liste d'identifications de PLMN ; et la commande, par la station de base (30,40) conformément à la première liste d'identifications de PLMN, d'un équipement utilisateur à transférer entre des identifications de PLMN comprend :
l'acquisition, par la station de base (30,40), de la première liste d'identifications de PLMN de référence indiquée par l'identifiant d'indication de référence dans la première liste d'identifications de PLMN ;
l'acquisition, par la station de base (30,40), d'une identification de PLMN autorisée pour un transfert correspondant à chaque première identification présentement desservie par la station de base (30,40) à partir de la première liste d'identifications de PLMN de référence ; et
la commande, par la station de base (30,40) conformément à l'identification de PLMN autorisée pour un transfert, de l'équipement utilisateur à transférer entre des identifications de PLMN

3. Procédé selon la revendication 1, dans lequel la commande, par la station de base (30,40) conformément à la première liste d'identifications de PLMN, d'un équipement utilisateur à transférer entre des identifications de PLMN comprend :
l'acquisition, par la station de base (30,40), de toutes les identifications de PLMN qui figurent dans la première liste d'identifications de PLMN et la deuxième liste d'identifications de PLMN et identifications de PLMN autorisées pour un transfert correspondant aux identifications de PLMN en tant que deuxième liste d'identifications de PLMN de référence ;
l'acquisition, par la station de base (30,40), d'une identification de PLMN autorisée pour un transfert correspondant à chaque première identification présentement prise en charge par la station de base (30,40) à partir de la deuxième liste d'identifications de PLMN de référence ; et
la commande, par la station de base (30,40) conformément à l'identification de PLMN autorisée pour un transfert, de l'équipement utilisateur à transférer entre des identifications de PLMN

4. Procédé selon la revendication 1, dans lequel la commande, par la station de base (30,40) conformément à la première liste d'identifications de PLMN, d'un équipement utilisateur à transférer entre des identifications de PLMN comprend :
l'acquisition, par la station de base (30,40), d'une même identification de PLMN à partir de la première liste d'identifications de PLMN et de la deuxième liste d'identifications de PLMN ;
l'acquisition, par la station de base (30,40), d'une même identification de PLMN autorisée pour un transfert à partir d'une identification de PLMN autorisée pour un transfert correspondant à la même identification de PLMN dans la première liste d'identifications de PLMN et la deuxième liste d'identifications de PLMN ;
l'établissement, par la station de base (30,40), d'une troisième liste d'identifications de PLMN de référence conformément à la même identification de PLMN et à la même identification de PLMN autorisée pour un transfert ;
l'acquisition, par la station de base (30,40), d'une identification de PLMN autorisée pour un transfert correspondant à chaque première identification présentement prise en charge par la station de base (30,40) à partir de la troisième liste d'identifications de PLMN de référence ; et
la commande, par la station de base (30,40) conformément à l'identification de PLMN autorisée pour un transfert, de l'équipement utilisateur à transférer entre des identifications de PLMN

5. Procédé selon l'une quelconque des revendications précédentes, dans lequel la première liste d'identifications de PLMN comprend en outre : des informations d'indication de norme de réseau, servant à indiquer une norme de réseau de l'identification de PLMN

6. Procédé selon la revendication 1, le procédé comprenant, avant l'acquisition, par la station de base (30,40), d'une première liste d'identifications de PLMN la configuration, par la station de base (30,40), d'un indicateur de transfert, l'indicateur de transfert servant à indiquer qu'un transfert entre des identifications de PLMN doit être réalisé ou non.

7. Station de base (30,40) prenant en charge différents PLMN, comprenant :
une unité de transfert (302), configurée pour commander, conformément à une première liste d'identifications de PLMN, un équipement utilisateur à transférer entre des identifications de PLMN, le transfert entre les identifications de PLMN comprenant un transfert de réseau et une redirection de réseau ;
une unité de réception (304), configurée pour recevoir une deuxième liste d'identifications de PLMN envoyée par une entité de gestion de mobilité MME, la deuxième liste d'identifications de PLMN servant à indiquer une identification de PLMN autorisée pour un transfert correspondant à l'équipement utilisateur que dessert présentement la station de base (30,40); et la station de base (30,40) étant **caractérisée en ce qu'**elle comprend en outre :
une unité d'acquisition (301), configurée pour acquérir la première liste d'identifications de PLMN, la première liste d'identifications de PLMN étant configurée dans la station de base (30,40) et servant à indiquer une identification de PLMN autorisée pour un transfert correspondant à chaque première identification présentement prise en charge par la station de base (30,40), et la première identification comprenant une ou plusieurs d'une identification de station de base, d'un identifiant opérateur et d'un identifiant de cellule.

8. Station de base (30,40) selon la revendication 7, la station de base (30,40) comprenant en outre :
une unité de configuration (303), configurée pour configurer la première liste d'identifications de PLMN

9. Station de base (30,40) selon la revendication 7, dans laquelle la première liste d'identifications de PLMN comprend en outre : un identifiant d'indication de référence, servant à indiquer une première liste d'identifications de PLMN de référence conformément à laquelle la station de base (30,40) réalise un transfert entre des identifications de PLMN, la première liste d'identifications de PLMN de référence étant la première liste d'identifications de PLMN ou la deuxième liste d'identifications de PLMN ; et l'unité de transfert (302) étant configurée spécifiquement pour :
acquérir la première liste d'identifications de PLMN de référence indiquée par l'identifiant d'indication de référence dans la première liste d'identifications de PLMN ;
acquérir une identification de PLMN autorisée pour un transfert correspondant à chaque première identification présentement prise en charge par la station de base (30,40) à partir de la première liste d'identifications de PLMN de référence ; et
commander, conformément à l'identification de PLMN autorisée pour un transfert, l'équipement utilisateur à transférer entre des identifications de PLMN

10. Station de base (30,40) selon la revendication 7, dans laquelle l'unité de transfert (302) est configurée spécifiquement pour :
acquérir toutes les identifications de PLMN qui figurent dans la première liste d'identifications de PLMN et la deuxième liste d'identifications de PLMN et identifications de PLMN autorisées pour un transfert correspondant aux identifications de PLMN en tant que deuxième liste d'identifications de PLMN de référence ;
acquérir une identification de PLMN autorisée pour un transfert correspondant à chaque première identification présentement prise en charge par la station de base (30,40) à partir de la deuxième liste d'identifications de PLMN de référence ; et
commander, conformément à l'identification de PLMN autorisée pour un transfert, l'équipement utilisateur à transférer entre des identifications de PLMN

11. Station de base (30,40) selon la revendication 7, dans laquelle l'unité de transfert (302) est configurée spécifiquement pour :
acquérir une même identification de PLMN à partir de la première liste d'identifications de PLMN et de la deuxième liste d'identifications de PLMN ;
acquérir une même identification de PLMN autorisée pour un transfert à partir d'une identification de PLMN autorisée pour un transfert correspondant à la même identification de PLMN dans la première liste d'identifications de PLMN et la deuxième liste d'identifications de PLMN ;
établir une troisième liste d'identifications de PLMN de référence conformément à la même identification de PLMN et à la même identification de PLMN autorisée pour un transfert ;
acquérir une identification de PLMN autorisée pour un transfert correspondant à chaque première identification présentement prise en charge par la station de base (30,40) à partir de la troisième liste d'identifications de PLMN de référence ; et
commander, conformément à l'identification de PLMN autorisée pour un transfert, l'équipement utilisateur à transférer entre des identifications de PLMN

12. Station de base (30,40) selon l'une quelconque des revendications 7 à 11, dans laquelle la première liste d'identifications de PLMN comprend en outre : des informations d'indication de norme de réseau, servant à indiquer une norme de réseau de l'identification de PLMN

13. Station de base (30,40) selon la revendication 7, dans laquelle l'unité d'acquisition (301) est configurée spécifiquement pour :
configurer un indicateur de transfert, l'indicateur de transfert servant à indiquer qu'un transfert entre des identifications de PLMN doit être réalisé ou non.
